Europäisches Patentamt

European Patent Office

Office européen des brevets

(19)

(11) Veröffentlichungsnummer: **0 158 960**
**B1**

(12) ## EUROPÄISCHE PATENTSCHRIFT

(45) Veröffentlichungstag der Patentschrift: **01.08.90**

(21) Anmeldenummer: **85104282.0**

(22) Anmeldetag: **09.04.85**

(51) Int. Cl.⁵: **G 11 B 5/704, B 32 B 27/36,
G 11 B 5/64, G 11 B 5/848**

(54) Trägerfolie für magnetische Informationsträger und deren Herstellung.

(30) Priorität: **16.04.84 DE 3414347**

(43) Veröffentlichungstag der Anmeldung:
**23.10.85 Patentblatt 85/43**

(45) Bekanntmachung des Hinweises auf die
Patenterteilung:
**01.08.90 Patentblatt 90/31**

(84) Benannte Vertragsstaaten:
**BE DE FR GB IT LU NL**

(56) Entgegenhaltungen:
**FR-A-2 098 217
GB-A-2 042 929**

(73) Patentinhaber: **HOECHST
AKTIENGESELLSCHAFT
Postfach 80 03 20
D-6230 Frankfurt am Main 80 (DE)**

(72) Erfinder: **Hensel, Hartmut, Dr.
Am Rotenberg 2
D-6229 Schlangenbad 3 (DE)**
Erfinder: **Dallmann, Hermann, Dr.
Erbsenacker 29
D-6200 Wiesbaden (DE)**

Courier Press, Leamington Spa, England

EP 0 158 960 B1

**Beschreibung**

Die Erfindung betrifft eine mehrschichtige, biaxial orientierte Trägerfolie für magnetische Informationsträger mit einer Basisschicht (A), umfassend eine thermoplastische Polymermatrix aus im wesentlichen linearem aromatischem Polyester, der zur Verbesserung seiner die Gleiteigenschaften der Folie bestimmenden Oberflächenrauhigkeit in fein verteilter Form feste Teilchen enthält.

Biaxial orientierte Folien aus Polyestern, insbesondere aus Polyethylenterephthalat, finden wegen ihrer überlegenen Eigenschaften, wie ihrer Zugfestigkeit, ihrer Reißfestigkeit, ihres Elastizitätsmoduls, ihrer Transparenz, ihrer chemischen Beständigkeit, ihrer thermischen Beständigkeit und dergleichen, Anwendung in großem Umfang auf vielen technischen Gebieten, beispielsweise auch als Träger für magnetische Aufzeichnungsmedien.

Die Polyesterfolien müssen jedoch eine spezifische Kombination von Eigenschaften aufweisen. So müssen Polyesterfolien, die zu Magnetbändern verarbeitet werden, die für die Audio- Video- oder Computer-Technik eingesetzt werden, einen niedrigen Reibungskoeffizienten und eine hohe Abreibbeständigkeit aufweisen und gegen eine Verschlechterung ihrer elektromagnetischen Übertragungseigenschaften unempfindlich sein.

Zur Verbesserung der Eigenschaften von Polyesterfolien ist es bereits bekannt, feine Teilchen eines inerten Materials in die Folien einzubringen, beispielsweise unter Anwendung einer der nachstehend angegebenen Methoden:

1) Im allgemeinen wird der Rückstand von metallischen Verbindungen, die als Umesterungskatalysator verwendet werden, durch besondere Maßnahmen in Form von feinverteilten Teilchen in dem System ausgefällt (als "Ausfällungsmethode" bezeichnet); und/oder

2) man führt von außen Mikroteilchen einer anorganischen oder organischen Verbindung mit unterschiedlicher Teilchengröße zu (als "Zugabemethode" bezeichnet).

Einschichtige Folien, die organische Teilchen in feiner Verteilung enthalten, werden beispielsweise in der DE—OS 30 19 073 beschrieben, Folien die zur Verbesserung ihrer Gleiteigenschaften anorganische Teilchen, enthalten, werden beschrieben in der DE—AS 21 33 895 und der DE—PS 26 47 713. Diese Folien sind einschichtige Folien und weisen daher auf beiden Oberflächen eine von der jeweils zugesetzten Teilchenmenge bzw. vom Teilchendurchmesser abhängige Oberflächenrauhigkeit auf.

Um die Oberflächenrauhigkeit auf der Oberfläche der Folie, die für die Aufnahme der Magnetschicht vorgesehen ist, zu erniedrigen, sind auch mehrschichtige Folien hergestellt worden, die aus einer ersten Schicht aus thermopolastischen Polymeren ohne Teilchenzusatz, welche eine vergleichsweise glatte Oberfläche aufweist, und einer zweiten dünneren, in der üblichen Weise mit Teilchen versehenen Schicht zusammengesetzt sind.

Es wurde festgestellt, daß der größte Nachteil der in herkömmliche Polyesterfolien eingebrachten Teilchen mit dem Zweck, das Gleitvermögen der Folie zu verbessern, in ihrer mangelnden Affinität zu dem Polymermaterial und in ihrer Neigung zur Agglomeratbildung zu sehen ist. Aufgrund dieser Tatsache führt die Reibung zwischen solchen herkömmlichen Folien untereinander oder zwischen einer solchen Folie und einem weiteren Material dazu, daß die Teilchen aus der Folie oder den Folien entfernt werden, was beispielweise zur Bildung von weißem Staub oder Abscheidungen auf den Folien führt, die für Magnetbänder verwendet werden. Diese Abscheidungen sind äußerst unerwünscht, da sie sich in den Geräten zur Abspielung der Magnetbänder absetzen und dort zu Schädigungen führen.

Wenn die Teilchen, die normalerweise gleichmäßig in den die einzelnen Schichten bildenden Polymeren verteilt sind, sehr nahe unter der Schichtoberfläche gelagert sind, kommt es durch Reibung beim Aufwickeln oder Umspulen der schon einseitig mit Magnetschicht versehenen Bänder oder aber auch der noch nicht beschichteten Folie leicht zum Ablösen der die Teilchen abdeckenden, extrem dünnen Polymerschichtblättchen und zur Herauslösung der eingelagerten Teilchen. Die extrem dünnen Polymerschichtblättchen haften allerdings durch elektrostatische Aufladung sehr fest an der Folie und können—da das Band gewickelt ist—auf die Magnetschicht übertragen werden, wodurch es zu unerwünschten Störeffekten wie Signalschwächungen, z.B. in Form von sogenannten "Drop-outs", kommt. Ausserdem drücken sich die herausgelösten festen Teilchen in die Magnetschicht ein und führen zu Verformungen und letztendlich ebenfalls zu Signalverlusten oder -verzerrungen. Durch diese unter dem Begriff "Abriebverhalten" zusammengefaßten Störeffekte passiert es im ungünstigsten Fall, daß die aus den angegebenen Trägermaterialien hergestellten Magnetbänder für einen sachgemäßen Einsatz als Video-, Audio- oder Computerbänder unbrauchbar werden. Für "flexible discs" (Floppy discs) gelten die Betrachtungen in ähnlicher Weise.

Der vorliegenden Erfindung lag daher die Aufgabe zugrunde, ausgehend vom dargestellten Stand der Technik eine Trägerfolie für magnetische Informationsträger zu schaffen, welche

—auf der für die Aufnahme der Magnetschicht vorgesehenen Oberfläche eine geringe Oberflächenrauhigkeit aufweist,

—auf der der Magnetschicht gegenüberliegenden Oberfläche eine die Gleiteigenschaften bestimmende große Oberflächenrauhigkeit aufweist,

— genügend große Festigkeit in Längs- und Querrichtung aufweist, um die Herstellung extrem dünner Bänder mit extrem hoher Signaldichte zu ermöglichen,

— eine ausgezeichnetes Abriebverhalten aufweist, so daß auch bei starker Reibungsbeanspruchung

keine Ablagerungen auf der Folienoberfläche beobachtet werden.

Gelöst wird diese Aufgabe durch eine der eingangs genannten Gattung angehörende Trägerfolie, deren kennzeichnende Merkmale darin zu sehen sind, daß die Basisschicht A die festen Teilchen in einer Menge von 0,001 Gew.-% bis 10 Gew.-%, bezogen auf das Gewicht des die Basisschicht A bildenden Polymeren, enthält, wobei die mittlere Teilchengröße der festen Teilchen im Bereich von 0,3 bis 20 µm liegt, daß die auf mindestens einer der beiden Oberflächen der Basisschicht A aufgebrachte Deckschicht B eine thermoplastische Polymermatrix aus im wesentlichen linearem, aromatischem Polyester umfasst, welcher in fein verteilter Form feste Teilchen in einer Menge von 0 bis 10 Gew.-%, bezogen auf das Gewicht des die Deckschicht B bildenden Polymeren, eingelagert sind, wobei die festen Teilchen einen mittleren Teilchendurchmesser von kleiner als 0,3 µm aufweisen, und daß die Schichtdicke der Desckschicht B höchstens 40% der Schichtdicke der Basisschicht A beträgt.

Die Basisschicht A kann dabei aus Polyester-Homopolymeren bestehen, die durch Polycondensation von beispielsweise Ethylenglykol mit Terephthalsäure oder Naphthalinsäure erhalten werden. Die Schicht A kann auch aus Gemischen verschiedener Polyester sowie Abmischungen oder Blends von Polyester-Homopolymeren mit anderen Polymeren wie z.B. Polyolefin-Homo- oder -Copolymerisaten, Polyamiden, Polycarbonaten, Ionomeren u.a. zusammengesetzt sein. Bevorzugt sie aus Polyethylenterephthalat. Sie enthält in fein veerteilter Form feste Teilchen in einer Menge von bevorzugt 0,001 bis 5 Gew.-%, besonders bevorzugt von 0,001 bis 1 Gew.-%, einverleibt sind, jeweils bezogen auf das Gewicht des die Basisschicht A bildenden Polyethylenterephthalats. Die Teilchen können aus einem anorganischen oder aber auch aus einem organischen Material sein, es können aber auch Präzipitate von Katalysatorresten oder Mischungen aller drei Teilchenarten sein. Beispiele hierfür sind ein oder mehrere der folgenden Materialien:

Siliciumdioxid wie z.B. hydrophobe pyrogene Kieselsäure, natürliches Siliciumdioxid und Diatomeenerdensiliciumdioxid; synthetische und natürliche Silikate wie Kaolin; natürliches und pyrogenes Alumiumoxid und Aluminiumhydroxid; Calciumcarbonat; Bariumsulfat; Titandioxid; Ruß; Metallteilchen wie z.B. solche aus Aluminium, Kupfer, Eisen usw.; magnetische Teilchen wie z.B. Bariumferrit; Teilchen aus polymeren Materialien wie z.B. Plastomere, Elastomere, Duromere.

Die Pigmente können zusätzlich zwecks besserer Haftung zur Matrix mit einem Haftvermittler beschichtet sein.

Die feinverteilten Teilchen haben eine mittlere Teilchengröße von bevorzugt 0,3 bis 15 µm, besonders bevorzugt von 0,5 bis 5,0 µm.

Auf wenigstens eine der Oberflächen der Basisschicht A ist eine Deckschicht B aufgebracht. Die Deckschicht B hat dabei eine Schichtdicke, die kleiner ist als die Schichtdicke der Basisschicht A, bevorzugt weist die Deckschicht B eine Dicke von maximal 30%, besonders bevorzugt von maximal 15% der Schichtdicke der Basisschicht A auf. Die Deckschicht B besteht bevorzugt aus Polyethylenterephthalat, welchem in sehr feiner Verteilung feste Teilchen in einer Menge von bevorzugt 0 bis 5 Gew.-%, besonders bevorzugt 0 bis 2 Gew.-%, ganz besonders bevorzugt 0 Gew.-%, jeweils bezogen auf das Gewicht des die Deckschicht B bildenden Polyethylenterephthalats, eingelagert sind, Die Festen Teilchen haben dabei einen Teilchendurchmesser von bevorzugt im Mittel kleiner als 0,2 µm, besonders bevorzugt kleiner als 0,1 µm.

Die festen Teilchen können aus den gleichen Materialien bestehen, wie sie bereits für die Basisschicht A beschrieben sind, es müssen aber nicht für Basisschicht und Deckshicht immer die gleichen Teilchen verwendet werden, sondern es können für die Desckschicht Teilchen aus anderen Materialien verwendet werden als diejenigen, welche der Basisschicht einverleibt sind.

Wenigstens eine der Schichten kann zusätzliche Additive wie z.B. Schlupf- und Gleitmittel wie z.B. Polysiloxan, Polyether- oder Polyestersiloxan, Fettsäureester sowie Antistatika, Antioxydationsmittel und dergleichen enthalten.

Die Deckschicht B hat die Aufgabe, die die Oberflächenrauhigkeit der Basisschicht A beeinflussenden Teilchen, die in der Basisschicht A enthalten sind, gerade soweit abzudecken, daß zwei Bedinungen erfüllt sind:

1. Die nach dem Aufbringen der Schicht B verbleibende Oberflächenrauhigkeit, die durch die teilchenbedingte Oberflächenstrukturierung der Schicht A hervorgerufen wird, welche sich teilweise durch die Deckschicht B hindurchdrückt oder die jedenfalls eine gewisse Oberflächenstrukturierung auch der Deckschicht B bewirkt, muß so groß sein, daß Reibungseigenschaften der Folie daraus resultieren, die sowohl das Wickeln der Folie als auch das Laufverhalten der aus der Folie hergestellten Magnetbänder positiv beeinflussen.

2. Die Teilchen müssen genügend weit von der freien Oberfläche der Deckschicht B entfernt sein, damit ein Herausreißen der Teilchen und somit ein Abrieb verhindert wird.

In einer besonderen Ausführungsform der Erfindung besitzt die Folie einen dreischichtigen Aufbau, umfassend eine Basisschicht A, bei welcher auf beiden Oberflächen Deckschichten B, B' aufgebracht sind. Die Basisschicht hat dabei die Zusammensetzung, wie sie bereits in der vorstehenden Beschreibung erläutert wurde. Eine einseitig beschichtete Folie weist auf der der Desckschicht B gegenüberliegenden Seite eine ganz bestimmte Oberflächenrauhigkeit auf, die abhängig ist von der jeweils zugesetzten Teilchenmenge und dem mittleren Teilchendurchmesser der zugesetzten Teilchen. Es soll aber die Magnetschicht auf eine Folienoberfläche aufgebracht werden, die von Unebenheiten im wesentlichen frei ist, damit die Magnetschicht nicht durch die Rauhigkeit des Untergrunds beeinfluß wird, sondern in

3

möglichst gleichmäßiger Schichtdicke vorliegt. Dies dient vor allem dazu, daß nicht an Stellen geringerer Schichtdicke Signalverluste beim Abspielen der Bänder auftreten.

Um der Magnetschicht eine glatte Unterlage zu bieten, werden gemäß der vorliegenden Erfindung beide Oberflächen der Basisschicht A mit Deckschichten B und B' der vorstehend beschriebenen Zusammensetzung überzogen. Die Schichtdicke der Desckschicht B', die auf der Seite der Basisschicht aufgetragen wird, die für das Aufbringen der Magnetschicht vorgesehen ist, wird so gewählt, daß die Unebenheiten, die durch in der Basisschicht A enthaltenen Teilchen auf der Oberfläche der Basisschicht A vorhanden sind, auf der Oberfläche der Desckschicht B' deutlich reduziert sind. Bevorzugt beträgt die Schichtdicke der Deckschicht B' auf der für die Beschichtung mit der Magnetschicht vorgesehenen Seite der Trägerfolie 0,1 bis 3 µm, besonders bevorzugt 0,1 bis 2 µm.

Die Deckschicht B' besteht dabei in der besonders bevorzugten Ausführungsform der Erfindung aus reinem Polyethylenterephthalat, welchem keine festen Teilchen einverleibt sind. Es können aber, um noch eine zusätzliche, die Reibungseigenschaften der Folie beeinflussende Oberflächenrauhigkeit zu erzeugen, feste Teilchen mit den angegebenen Teilchengrößen von höchstens 0,3 µm in der Deckschicht B vorhanden sein.

Die Deckschicht B, die auf der Seite der Basisschicht A aufgetragen wird, die der Oberfläche, auf der das Aufbringen der Magnetschicht vorgesehen ist, gegenüberliegt, soll dabei mit einer solchen Schichtdicke aufgebracht sein, daß die Oberflächenstruktur der darunterliegenden Basisschicht noch erkennbar ist, bevorzugt beträgt die Schichtdicke 0,1 bis 1 µm, besonders bevorzugt 0,1 bis 0,5 µm. Die Deckschicht B besteht dabei in der besonders bevorzugten Ausführungsform der Erfindung aus reinem Polyethylenterephthalat, welchem keine festen Teilchen einverleibt sind, es können aber, um in Einzelfällen eine zusätzliche Oberflächenteilstrukturierung zu erreichen, auch noch feste Teilchen mit den angegebenen Teilchengrößen von höchstens 0,3 µm in der Desckschicht B vorhanden sein.

Die Herstellung der im Vorstehenden beschriebenen Trägerfolie erfolgt nach dem Extrusionsverfahren, bevorzugt nach dem Coextrusionsverfahren, besonders bevorzugt nach dem Coextrusionsverfahren mittels Mehrschichtdüse, bei der die separat aufbereiteten Schmelzeströme erst unmittelbar vor Austritt aus der Düse übereinandergelegt vereinigt werden. Bei diesem Verfahren werden die die einzelnen Schichten der Trägerfolie bildenden Polymeren in getrennten Extrudern plastifiziert, vereinigt, auf eine Kühlwalze extrudiert und in unverstrecktem Zustand abgekühlt. Anschließend wird die unverstreckte Folie durch simultanes oder mehrfaches Verstrecken in Längs- und Querrichtung orientiert, thermofixiert, geschnitten und aufgewickelt. Das kennzeichnende Merkmal dieses Verfahrens ist darin zu sehen, daß die Basisschicht A die festen Teilchen in einer Menge von 0,001 Gew.-% bis 10 Gew.-%, bezogen auf das Gewicht des die Basisschicht A bildenden Polymeren, enthält, wobei die mittlere Teilchengröße der festen Teilchen im Bereich von 0,3 bis 20 µm liegt, daß die auf mindestens einer der beiden Oberflächen der Basisschicht A aufgebrachte Deckschicht B eine thermoplastische Polymermatrix aus im wesentlichen linearem, aromatischem Polyester umfasst, welcher in fein verteilter Form feste Teilchen in einer Menge von 0 bis 10 Gew.-%, bezogen auf das Gewicht des die Deckschicht B bildenden Polymeren, eingelagert sind, wobei die festen Teilchen einen mittleren Teilchendurchmesser von kleiner als 0,3 µm aufweisen, und daß die Schichtdicke der Deckschicht B höchstens 40% der Schichtdicke der Basisschicht A beträgt. Die Variation der Schichtdicke(n) der Deckschicht(en) B, B' geschieht dabei bevorzugt durch Regulierung der Zufuhr der Schmelzen der die Deckschicht(en) B, B' bildenden Polymeren an den Schmelzeleitungen zu der Coextrusionsdüse, es kann aber auch durch Regulierung der Drehzahl der für die Plastifizierung und Förderung der die Deckschicht(en) B, B' bildenden Polymeren vorgesehen Aggregate eine Variation der Schichtdicke(n) vorgenommen werden.

Durch dieses Verfahren hat der Fachmann ein einfaches Mittel in der Hand, Folien mit verschiedensten Oberflächenbeschaffenheiten herzustellen. Es können Folien mit auf beiden Seiten in wesentlichen glatter Oberfläche erzeugt werden, indem die Schichtdicken der beidseitig aufgebrachten Deckschichten B, B' so groß gewählt werden, daß alle auf den Oberflächen der Basisschicht A vorhandenen Strukturierungen überdeckt werden, es können Folien mit einer im wesentlichen glatten Oberfläche und einer im Vergleich zu dieser relativ rauhen Oberfläche erzeugt werden, indem eine der Schichtdicken der Deckschichten B so groß gewählt wird, daß alle auf der Basisschicht A vorhandenen Strukturierungen überdeckt werden, und indem die Schichtdicke der anderen Deckschicht B so klein gewählt wird, daß Strukturierungen der Basisschicht A auf der Oberfläche der Deckschicht B noch deutlich erkennbar sind.

Die im Nachfolgenden beschriebenen Ausführungsbeispiele sollen dazu dienen, die Erfindung noch deutlicher, insbesondere im Vergleich mit dem Stand der Technik, zu erläutern.

Beispiel 1 (Vergleichsbeispiel)

Ein Polyethylenterephthalat mit einem Zusatz von 0,3 Gew.-%, bezogen auf das Gewicht des Polyethylenterephthalats, von gleichmäßig verteilten anorganischen Partikeln aus $BaSO_4$ mit einem mittleren Teilchendurchmesser von 1,0 µm wird als Monofilm mit einer Schichtdicke von 180 µm extrudiert und auf einer Kühlwalze abgekühlt.

Der erhaltene Vorfilm wird auf 82°C mittels Walzen aufgeheizt und in einem Spalt zwischen zwei Walzen um den Faktor 3,5 längsgestreckt und sofort abgekühlt, anschließend wieder auf 110°C aufgeheizt und um den Faktor 3,4 quergestreckt.

Die so erhaltene biaxial gestreckte Folie wird für etwa 2 sec einer Temperatur von 230°C ausgesetzt. Sie hat in Längs- und Querrichtung nahezu gleiche mechanische Eigenschaften und ist etwa 15 µm dick.

Beispiel 2 bis 8 (erfindungsgemäß)

Ein Polyethylenterephthalat gemäß Beispiel 1 und ein Polyethylenterephthalat'ohne Teilchenzusätze werden separat mittels Extrudern aufgeschmolzen, mit Hilfe zweier Zahnradpumpen (Dosierpumpen) einer Dreischichtdüse zugeführt und derart extrudiert, daß das Polyethylenterephthalat ohne Teilchenzusätze das Polyethylenterephthalat nach Beispiel 1 sowohl auf der Ober- als auch auf der Unterseite mit gleicher Schichtdicke abdeckt.

Der so erhaltene Verbundstrom wird in gleicher Weise wie in Beispiel 1, jetzt allerdings als dreischichtiger Mehrschichtfilm, zu 15 µm dicken Folien verarbeitet.

Während der Herstellung der Mehrschichtfolie werden mittels Drehzahlregulierung der Zahnradpumpen die Schichtdicken der Deckschichten beidseitig in folgender Weise eingestellt:

| Beispiel | 2 | 3 | 4 | 5 | 6 | 7 | 8 |
|---|---|---|---|---|---|---|---|
| Schichtdicke (µm) | 0,2 | 0,3 | 0,5 | 1,0 | 1,5 | 2,0 | 2,5 |

Die Gesamtdicke der Filme beträgt jeweils 15 µm.
Die erhaltenen Folien können als symmetrische (BAB)-Folien bezeichnet werden.
Die Folien der Beispiele 1 und 2 bis 8 werden folgenden Tests unterworfen:
a) Gleitreibung gamäß DIN 53375,
b) Rauhigkeitsmessung der Oberflächen gemäß DIN 4768 (cut off: 0,25 mm),
c) Abriebtest mit Gerät entsprechend eigener Entwicklung.
Ergebnisse:
a) Die Ergebnisse der Messungen der Gleitreibung sind in der folgenden Tabelle I zusammengestellt.

TABELLE I

| Beispiel | Gleitreibung |
|---|---|
| 1 | 0,34 |
| 2 | 0,37 |
| 3 | 0,43 |
| 4 | 1,05 |
| 5 | >1,5 |
| 6 | >1,5 |
| 7 | >1,5 |
| 8 | >1,5 |

Die Folie nach Beispiel 1 weist einen Gleitreibungskoeffizienten von 0,34 auf. Die Oberfläche der Basisschicht kann mit einer Deckschicht einer Schichtdicke von etwa 0,2 µm abgedeckt werden, ohne daß sich das Gleitreibungsverhalten der entstehenden Folie im Vergleich zu einer nicht beschichteten Folie wesentlichen verändert. Selbst bei einer Schichtdicke der Deckschicht von 0,5 µm (Beispiel 4) ist noch keine gravierend nachteilige Beeinflussung zu beobachten.

Erst bei einer Schichtdicke der Deckschicht von 1,0 µm und mehr (Beispiele 5 bis 8) verändert sich die Oberfläche der Folie so, daß sie in ihrem Gleitverhalten einer Folie ohne jeglichen Teilchenzusatz entspricht, bei der also "Blocken" zu beobachten ist.

b) Die Ergebnisse der Messungen der Oberflächenrauhigkeit sind in der nachfolgenden Tabelle II zusammengestellt.

TABELLE II

| Beispiel | $R_t$ (µm) | $R_a$ (µm) |
|---|---|---|
| 1 | 0,46 | 0,05 |
| 2 | 0,41 | 0,035 |
| 3 | 0,40 | 0,028 |
| 4 | 0,31 | 0,018 |
| 5 | 0,24 | 0,011 |
| 6 | 0,18 | 0,007 |
| 7 | 0,19 | 0,008 |
| 8 | 0,19 | 0,008 |

Wie Tabelle II zeigt kann durch Variation der Schichtdicke der Deckschichten ohne jeglichen Teilchenzusatz die Oberflächenrauhigkeit der Folie deutlich beeinflußt werden. Beträgt die Schichtdicke 1,5 µm, und mehr, so ist eine Veränderung nicht mehr möglich.

In Zusammenschau mit dem bereits diskutierten Gleitreibungsverhalten kann im Bereich einer Schichtdicke der Deckschichten von 0,0 bis 0,5 µm die Oberflächenrauhigkeit ($R_t/R_a$), die die Güte des magnetischen Signals beeinflußt, ohne nachteiligen Gleitreibungsverlust in den in der Tabelle II angegebenen Werten variabel eingestellt werden.

c) Das Abreibverhalten der nach den Beispielen hergestellten Folien wurde an einem Meßgerät getestet, bei dem ein 12,5 mm breites Folienband mit einer konstanten Bahnspannung (1 N) über eine Reibwalze (feststehende Umlenkrolle aus einer Magnetbandkassette) gezogen, anschließend über zwei als Meßrollen dienende Gummirollen geführt und dann aufgerollt wurde. Die Beladung der Gummirollen mit abgeriebenem Material wurde nach einer Meßskala von 1, entspricht sehr wenig Abrieb, bis 6, entspricht sehr viel Abreib, beurteilt. Die Meßergebnisse sind in der nachfolgenden Tabelle III zusammengestellt.

TABELLE III

| Beispiel | Abrieb |
|---|---|
| 1 | 6 |
| 2 | 3 |
| 3 | 2 |
| 4 | 1 |
| 5 | 1 |
| 6 | — (4) |
| 7 | — |
| 8 | — |

Die dargestellten Meßwerte stellen die Mittelwerte aus 10 Einzelmessungen dar.

Mit zunehmender Schichtdicke der Deckschichten ist eine Verbesserung des Abriebverfahrens feststellbar. Bei den Beispielen 6 bis 8 war allerdings keine eindeutige Aussage mehr möglich, da die Folie an der Reibwalze blockierte und die konstante Bahnspannung nicht mehr eingehalten werden konnte.

**Patentansprüche**

1. Mehrschichtige, biaxial orientierte Trägerfolie für magnetische Informationsträger mit einer Basisschicht (A), umfassend eine thermoplastische Polymermatrix aus im wesentlichen linearem aromatischem Polyester, der zur Verbesserung seiner die Gleiteigenschaften der Folie bestimmenden Oberflächenrauhigkeit in fein verteilter Form feste Teilchen enthält, dadurch gekennzeichnet, daß die Basisschicht (A) die festen Teilchen in einer Menge von 0.001 Gew.-% bis 10 Gew.-%, bezogen auf das Gewicht des die Basisschicht (A) bildenden Polymeren, enthält, wobei die mittlere Teilchengröße der festen Teilchen im Bereich von 0,3 bis 20 μm liegt, daß die auf mindestens einer der beiden Oberflächen der Basisschicht (A) aufgebrachte Deckschicht (B) eine thermoplastische Polymermatrix aus im wesentlichen linearem, aromatischem Polyester umfasst, welcher in fein verteilter Form feste Teilchen in einer Menge von 0 bis 10 Gew.-%, bezogen auf das Gewicht des die Deckschicht (B) bildenden Polymeren, eingelagert sind, wobei die festen Teilchen einen mittleren Teilchendurchmesser von kleiner als 0,3 μm aufweisen, und daß die Schichtdicke der Deckschicht (b) höchstens 40% der Schichtdicke der Basisschicht (A) beträgt.

2. Trägerfolie nach Anspruch 1, dadurch gekennzeichnet, daß die Schichtdicke der Deckschicht (B) maximal 30% der Schichtdicke der Basisschicht (A) beträgt, bevorzugt maximal 15%.

3. Trägerfolie nach Anspruch 1 oder 2, dadurch gekennzeichnet, daß die Basisschicht (A) aus Polyethylenterephthalat besteht, welches in fein verteilter Form feste Teilchen in einer Menge von 0,001 bis 5 Gew.-%, bevorzugt von 0,001 bis 1 Gew.-%, enthält, bezogen auf das Gewicht des die Basisschicht (A) bildenden Polyethylenterephthalats, wobei die Teilchen anorganische und/oder organische Additive und/oder Katalysatorpräzipitate sein können.

4. Trägerfolie nach einem der Ansprüche 1 bis 3, dadurch gekennzeichnet, daß die in der Basisschicht (A) enthaltenen Teilchen eine mittlere Teilchengröße von 0,3 bis 15 μm, bevorzugt von 0,5 bis 5,0 μm, aufweisen.

5. Trägerfolie nach einem der Ansprüche 1 bis 4, dadurch gekennzeichnet, daß die Deckschicht (B) aus Polyethylenterephthalat besteht, welches in fein verteilter Form feste Teilchen in einer Menge von 0 bis 5 Gew.-%, bevorzugt von 0 bis 2 Gew.-%, besonders bevorzugt von 0 Gew.-%, jeweils bezogen auf das Gewicht des die Deckschicht B bildenden Polyethylenterephthalats, enthält.

6. Trägerfolie nach einem der Ansprüche 1 bis 3, dadurch gekennzeichnet, daß wenigstens eine Schicht zusätzlich Additive wie Gleitmittel oder Antistatika enthält.

7. Trägerfolie nach einem der Ansprüche 1 bis 6, dadurch gekennzeichnet, daß die in der Deckschicht (B) enthaltenen Teilchen eine mittlere Teilchengröße von kleiner als 0,2 μm, bevorzugt von kleiner als, 0,1 μm aufweisen, wobei die Teilchen anorganische und/oder organische Additive und/oder Katalysatorpräzipitate sein können.

8. Trägerfolie nach einem der Ansprüche 1 bis 7, dadurch gekennzeichnet, daß auf beiden Seiten der Basisschicht (A) Deckschichten (B, B') aufgebracht sind.

9. Trägerfolie nach Anspruch 8, dadurch gekennzeichnet, daß die Schichtdicken der beiden Deckschichten unterschiedlich sind.

10. Trägerfolie nach einem der Ansprüche 8 oder 9, dadurch gekennzeichnet, daß die auf der Seite der Trägerfolie, die für die Auftragung der Magnetschicht vorgesehen ist, vorliegende Deckschicht (B') eine Schichtdicke von 0,5 bis 3 μm, bevorzugt von 0,5 bis 2 μm, aufweist.

11. Trägerfolie nach einem der Ansprüche 8 bis 10, dadurch gekennzeichnet, daß die auf der Seite der Trägerfolie, die der für die Auftragung der Magnetschicht vorgesehenen Seite gegenüberliegt, vorliegende Deckschicht (B) eine Schichtdicke von 0,1 bis 2 μm, bevorzugt von 0,1 bis 1 μm, aufweist.

12. Verfahren zur Herstellung einer Trägerfolie nach einem der Ansprüche 1 bis 11 durch Coextrusion, bei dem die die einzelnen Schichten der Trägerfolie bildenden Polymeren in getrennten Extrudern plastifiziert, vereinigt, auf eine Kühlwalze extrudiert und in unverstrecktem Zustand abgekühlt werden, anschließend die unverstreckte Folie durch simultanes oder mehrfaches Verstrecken in Längs- und Querrichtung orientiert, thermofixiert, geschnitten und aufgewickelt wird, dadurch gekennzeichnet, daß die Basisschicht (A) die festen Teilchen in einer Menge von 0.001 Gew.-% bis 10 Gew.-%, bezogen auf das Gewicht des die Basisschicht (A) bildenden Polymeren, enthält, wobei die mittlere Teilchengröße der festen Teilchen im Bereich von 0,3 bis 20 μm liegt, daß die auf mindestens einer der beiden Oberflächen der Basisschicht (A) aufgebrachte Deckschicht (B) eine thermoplastische Polymermatrix aus im wesentlichen linearem, aromatischem Polyester umfasst, welcher in fein verteilter Form feste Teilchen in einer Menge von 0 bis 10 Gew.-%, bezogen auf das Gewicht des die Deckschicht (B) bildenden Polymeren, eingelagert sind, wobei die festen Teilchen einen mittleren Teilchendurchmesser von kleiner als 0,3 μm aufweisen, und daß die Schichtdicke der Deckschicht (B) höchstens 40% der Schichtdicke der Basisschicht (A) beträgt.

13. Verfahren nach Anspruch 12, dadurch gekennzeichnet, daß zur Variation der Schichtdick(en) der Deckschicht(en) (B, B') die Zufuhr der die Deckschicht(en) (B, B') bildenden Polymeren zu der Coextrusionsdüse reguliert wird.

14. Verfahren nach einem der Ansprüche 12 oder 13, dadurch gekennzeichnet, daß die Regulierung der Schmelzeströme der die Deckschicht(en) (B, B') bildenden Polymeren durch die Einstellung der Drehzahl der zur Plastifizierung und Förderung der Polymeren vorgesehen Aggregate vorgenommen wird.

## EP 0 158 960 B1

**Revendications**

1. Pellicule de support multicouche, orientée biaxialement, pour supports magnétiques d'informations, comportant une couche de base (A), comprenant une matrice polymère thermoplastique à base d'un polyester aromatique essentiellement linéaire qui contient des particules solides sous forme finement divisée, pour l'amélioration de sa rugosité superficielle déterminant les propriétés de glissement de la pellicule, caractérisée en ce que la couche de base (A) contient les particules solides en une quantité de 0,001% en poids à 10% en poids, par rapport au poids du polymère formant la couche de base (A), la taille moyenne des particules solides étant dans la plage de 0,3 à 20 μm, en ce que la couche de recouvrement (B), appliquée sur au moins l'une des deux faces de la couche de base (A), comprend une matrice de polymère thermoplastique constituée d'un polyester aromatique essentiellement linéaire, dans lequel sont incorporées des particules solides sous forme finement divisée, en une quantité de 0 à 10% en poids par rapport au poids du polymère formant la couche de recouvrement (B), les particules solides présentent un diamètre moyen de particules inférieur à 0,3 μm, et en ce que l'épaisseur de la couche de recouvrement (B) représente au maximum 40% de l'épaisseur de la couche de base (A).

2. Pellicule de support la revendication 1, caractérisée en ce que l'épaisseur de la couche de recouvrement (B) représente 30% au maximum, de préférence 15% au maximum de l'épaisseur de la couche de base (A).

3. Pellicule de support selon la revendication 1 ou 2, caractérisée en ce que la couche de base (A) est constituée de poly(téréphtalate d'éthylène) contenant sous forme finement divisée des particules solides en une quantité de 0,001 à 5% en poids, de préférence de 0,001 à 1% en poids, par rapport au poids du poly(téréphtalate d'éthylène) constituant la couche de base (A), les particules pouvant être des additifs minéraux et/ou organiques et/ou des précipités de catalyseurs.

4. Pellicule de support selon l'une des revendications 1 à 3, caractérisée en ce que les particules contenues dans la couche de base (A) présentent une taille moyenne de particules de 0,3 à 15 μm, de préférence de 0,5 à 5,0 μm.

5. Pellicule de support selon l'une des revendications 1 à 4, caractérisée en ce que la couche de recouvrement (B) est constituée de poly(téréphtalate d'éthylène) contenant, sous forme finement divisée, des particules solides en une quantité de 0 à 5% en poids, de préférence de 0 à 2% en poids, en particulier de 0% en poids, dans chaque cas par rapport au poids du poly(téréphtalate d'éthylène) constituant la couche de recouvrement (B).

6. Pellicule de support selon l'une des revendications 1 à 3, caractérisée en ce qu'au moins une couche contient en outre des additifs, tels que des lubrifiants ou des agents antistatiques.

7. Pellicule de support selon l'une des revendications 1 à 6, caractérisée en ce que les particules contenues dans la couche de recouvrement (B) présentent une taille moyenne de particules inférieure à 0,2 μm, de préférence inférieure à 0,1 μm, les particules pouvant être des additifs minéraux et/ou organiques et/ou des précipités de catalyseurs.

8. Pellicule de support selon l'une des revendications 1 à 7, caractérisée en ce que des couches de recouvrement (B, B') sont appliquées sur les deux côtés de la couche de base (A).

9. Pellicule de support selon la revendication 8, caractérisée en ce que les épaisseurs des deux couches de recouvrement sont différentes.

10. Pellicule de support selon l'une des revendications 8 ou 9, caractérisée en ce que la couche de recouvrement (B') se trouvant sur le côté de la pellicule de support qui est prévu pour l'application de la couche magnétique, présente une épaisseur de couche de 0,5 à 3 μm; de préférence de 0,5 à 2 μm.

11. Pellicule de support selon l'une des revendications 8 à 10, caractérisée en ce que la couche de recouvrement (B) se trouvant sur le côté de la pellicule de support qui est opposé au côté prévu pour l'application de la couche magnétique, présente une épaisseur de couche de 0,1 à 2 μm, de préférence de 0,1 à 1 μm.

12. Procédé pour la fabrication d'une pellicule de support selon l'une des revendications 1 à 11, par co-extrusion, dans lequel les polymères constituant les couches individuelles de la pellicule de support sont plastifiés dans des extrudeuses séparées, réunis, extrudés sur un cylindre refroidisseur et refroidis à l'état non étiré, la pellicule non étirée est ensuite orientée dans le sens longitudinal et dans le sens transversal par étirage simultané ou multiple, thermofixée, découpée puis enroulée, caractérisé en ce que la couche de base (A) contient des particules solides en une quantité de 0,001% en poids à 10% en poids, par rapport au poids du polymère constituant la couche de base (A), la taille moyenne des particules solides étant dans la plage de 0,3 à 20 μm, en ce que la couche de recouvrement (B), appliquée sur au moins l'une des deux faces de la couche de base (A), comprend une matrice de polymère thermoplastique constituée d'un polyester aromatique essentiellement linéaire, dans lequel sont incorporées, sous forme finement divisée, des particules solides en une quantité de 0 à 10% en poids par rapport au poids du polymère constituant la couche de recouvrement (B), les particules solides présentant un diamètre moyen de particule inférieur à 0,3 μm, et en ce que l'épaisseur de la couche de recouvrement (B) représente au maximum 40% de l'épaisseur de la couche de base (A).

13. Procédé selon la revendication 12, caractérisé en ce que, pour la variation de l'épaisseur de la(des) couche(s) de recouvrement (B, B'), on règle l'introduction des polymères constituant la(les) couche(s) de recouvrement (B, B') dans la filière de co-extrusion.

8

14. Procédé selon l'une des revendications 12 ou 13, caractérisé en ce que le réglage des courants de masse fondue des polymères constituant la(les) couche(s) de recouvrement (B, B') est effectué par le réglage de la vitesse de rotation des appareils prévus pour la plastification et le transport des polymères.

## Claims

1. A multilayer, biaxially oriented carrier film for magnetic information media comprised of a substrate layer (A) comprising a thermoplastic polymer matrix made of essentially linear aromatic polyester containing finely distributed solid particles to improve its surface roughness which determines the slip properties of the film, characterized in that said solid particles are contained in said substrate layer (A) in an amount of 0.001% by weight to 10% by weight, relative to the weight of the polymer forming said substrate layer (A), the average particle size of said solid particles being in the range of 0.3 µm to 20 µm; that a cover layer (B), applied to at least one surface of said substrate layer (A), has a thermoplastic polymer matrix comprising essentially linear, aromatic polyester, which incorporates finely distributed solid particles in an amount of 0% by weight to 10% by weight, relative to the polymer forming said cover layer (B), said solid particles having an average particle size of less than 0.3 µm; and that the thickness of said cover layer (B) is not more than 40% of the thickness of said substrate layer (A).

2. The carrier film as claimed in claim 1, wherein the thickness of said cover layer (B) is not more than 30%, and preferably is not more than 15%, of the thickness of said substrate layer (A).

3. The carrier film as claimed in claim 1 or 2, wherein said substrate layer (A) is comprised of polyethylene terephthalate containing finely distributed solid particles in an amount of 0.001% by weight to 5% by weight, relative to the weight of the polyethylene terephthalate forming said substrate layer (A), it being possible for said particles to be inorganic and/or organic additives and/or precipitates of catalyst residues.

4. The carrier film as claimed in any of claims 1 to 3, wherein said particles contained in said substrate layer (A) have an average particle size of 0.3 µm to 15 µm, preferably of 0.5 µm to 5.0 µm.

5. The carrier film as claimed in any of claims 1 to 4, wherein said cover layer (B) is comprised of polyethylene terephthalate containing finely distributed solid particles in an amount of 0 to 5% by weight, preferably of 0 to 2% by weight, and particularly preferably of 0% by weight, each time relative to the weight of the polyethylene terephthalate forming said cover layer (B).

6. The carrier film as claimed in any of claims 1 to 3, wherein additives, such as slip agents or antistatic agents, are additionally contained in at least one layer.

7. The carrier film as claimed in any of claims 1 to 6, wherein said particles contained in said cover layer (B) have an average particle size of less than 0.2 µm, preferably of less than 0.1 µm, it being possible for said particles to be inorganic and/or organic additives and or precipitates of catalyst residues.

8. The carrier film as claimed in any of claims 1 to 7, wherein cover layers (B, B') are applied to both surfaces of said subtrate layer (A).

9. The carrier film as claimed in claim 8, wherein the two cover layers have different thicknesses.

10. The carrier film as claimed in any of claims 8 or 9, wherein said cover layer (B'), which is present on the surface of said substrate film where the magnetic layer is to be applied, has a layer thickness of 0.5 µm to 3 µm, preferably of 0.5 µm to 2 µm.

11. The carrier film as claimed in any of claims 8 to 10, wherein said cover layer (B), which is present on the surface of said substrate layer (A) lying opposite the surface where the magnetic layer is to be applied, has a layer thickness of 0.1 µm to 2 µm, preferably of 0.1 µm to 1 µm.

12. A process for manufacturing, by coextrusion, a carrier film as claimed in any of claims 1 to 11, which comprises plastifying the polymers forming the individual layers of said substrate film in separate extruders, combining the plastified polymers, extruding them onto a chill roller and chilling the extrudate in the unstretched state, thereafter orienting the unstretched film by simultaneous or multiple stretching in the longitudinal and transverse directions, heat-setting, slitting and winding the film, said process being characterized in that said solid particles are contained in said substrate layer (A) in an amount of 0.001% by weight to 10% by weight, relative to the weight of the polymer forming said substrate layer (A), the average particle size of said solid particles being in the range of 0.3 µm to 20 µm; that said cover layer (B), applied to at least one surface of said substrate layer (A), has a thermoplastic polymer matrix comprising essentially linear, aromatic polyester, which incorporates finely distributed solid particles in an amount of 0% by weight to 10% by weight, relative to the polymer forming said cover layer (B), said solid particles having an average particle size of less than 0.3 µm; and that the thickness of said cover layer (B) is not more than 40% of the thickness of said substrate layer (A).

13. The process as claimed in claim 12, wherein the thickness(es) of said cover layer(s) (B, B') is (are) varied by regulating the melt feed of the polymers forming said cover layer(s) (B, B') to the extrusion die.

14. The process as claimed in any of claims 12 or 13, wherein the melt feed(s) of the polymers forming said cover layer(s) (B, B') are regulated by appropriately adjusting the rpm of the assemblies provided for plastifying and conveying said polymers.